Europäisches Patentamt

European Patent Office

Office européen des brevets

(11) Veröffentlichungsnummer: **0 143 899**
A1

## (12) EUROPÄISCHE PATENTANMELDUNG

(21) Anmeldenummer: 84109970.8

(22) Anmeldetag: 22.08.84

(51) Int. Cl.⁴: **F 16 D 25/06**
F 16 L 27/08

(30) Priorität: 05.10.83 DE 3336118

(43) Veröffentlichungstag der Anmeldung:
12.06.85 Patentblatt 85/24

(84) Benannte Vertragsstaaten:
DE FR GB IT

(71) Anmelder: WABCO Westinghouse Fahrzeugbremsen GmbH
Am Lindener Hafen 21 Postfach 91 12 80
D-3000 Hannover 91(DE)

(72) Erfinder: Reinecke, Erich, Ing.-grad.
Kastanieneck 6
D-3167 Burgdorf(DE)

(74) Vertreter: Schrödter, Manfred
WABCO Westinghouse Fahrzeugbremsen GmbH Am Lindener Hafen 21 Postfach 91 12 80
D-3000 Hannover 91(DE)

(54) Druckmittelbetätigbare Kupplung.

(57) Die Erfindung betrifft eine druckmittelbetätigbare Kupplung mit einem mit einer Antriebsmaschine verbundenen Antriebsteil und einem mit einem anzutreibenden Teil verbundenen Abtriebsteil. Mittels kraft- und/oder formschlüssiger Kupplungsmittel sind das Antriebsteil und das Abtriebsteil unter dem Einfluß einer Federkraft miteinander in Wirkverbindung bringbar. Im Abtriebsteil der Kupplung ist ein Betätigungskolben angeordnet, welcher vom Druck aus einer Arbeitskammer im Sinne einer Aufhebung der Wirkverbindung zwischen dem Antriebsteil und dem Abtriebsteil beaufschlagbar ist. Die Arbeitskammer ist über eine Verbindungsleitung mit einer Druckmittelquelle verbindbar. Die Verbindungsleitung weist eine Rotor-Dichtung auf, die zwischen dem Abtriebsteil oder dem anzutreibenden Teil einerseits und einer dem gegenüber ortsfesten Druckmittelleitung angeordnet ist.

./...

Fig. 1

- 1 -

Hannover, 04.10.1983
WP 20/83 K/Tö

WABCO Westinghouse
Fahrzeugbremsen GmbH

Druckmittelbetätigbare Kupplung

Die Erfindung betrifft eine druckmittelbetätigbare
Kupplung gemäß dem Oberbegriff des Patentanspruchs 1.

Derartige Kupplungen werden z.B. zwischen einen Kompressor und eine zum Antrieb des Kompressors dienende Maschine geschaltet. Über eine Steuerventileinrichtung ist die Kupplung bei Erreichen eines vorbestimmbaren Abschaltdruckes des Kompressors schaltbar.

Aus der DE-OS 30 30 094 ist eine solche druckmittelbetätigbare Kupplung für einen Kompressor bekannt. Diese bekannte Kupplung besteht im wesentlichen aus einem Antriebsteil, welches mit einer Antriebsmaschine verbunden ist, und aus einem Abtriebsteil, welches mit der Kurbelwelle des Kompressors in Verbindung steht. Eine drehfest mit der Kurbelwelle des Kompressors verbundene Hülse dient als Lagerung für das Antriebsteil und das Abtriebsteil der Kupplung. Das Antriebsteil ist mittels zweier Kugellager drehbar auf der Hülse gelagert und das Abtriebsteil ist drehfest mit der Hülse verbunden. Das Antriebsteil und das Abtriebsteil sind durch die Kraft von Druckfedern miteinander in Wirkverbindung bringbar.

In einem koaxial zur Kurbelwelle des Kompressors am Kompressorgehäuse gelagerten Flansch ist eine abgestufte ringförmige Ausnehmung vorgesehen. In der Ausnehmung ist ein erster L-förmiger Ring axial verschiebbar angeordnet. Auf den Ring ist ein Kugellager aufgezogen. An der Stirnseite des Kugellagers, welche dem ersten Ring abgewandt ist, liegt am Außenring des Kugellagers ein zweiter L-förmig ausgebildeter Ring an. Auf der dem Kugellager abgewandten Seite des ersten Ringes ist in der Ausnehmung ein axial verschiebbarer Ringkolben angeordnet. Der Ringkolben begrenzt eine Druckmittelkammer, die über einen Druckmittelanschluß mit einer Druckmittelquelle verbindbar ist.

Am Abtriebsteil der Kupplung sind Druckbolzen befestigt, die sich durch entsprechende im Abtriebsteil vorgesehene Ausnehmungen achsparallel zum Ringkolben erstrecken. Die freien Enden der Druckbolzen liegen an dem die Stirnseite des Kugellagers abdeckenden zweiten L-förmigen Ring an.

Soll bei dieser bekannten Kupplung das Antriebsteil vom Abtriebsteil getrennt werden (Ausrücken der Kupplung), so wird über den Druckmittelanschluß Druckmittel in die vom Ringkolben begrenzte Druckmittelkammer eingesteuert. Der sich in der Druckmittelkammer aufbauende Druck verschiebt den Ringkolben in Richtung auf die
beiden Kupplungsteile (Antriebsteil, Abtriebsteil) zu.
Dabei wird der das Kugellager und somit auch den zweiten Ring tragende erste Ring vom Ringkolben gegen die
Druckbolzen gedrückt und diese in Richtung auf das Antriebsteil zu verschoben. Das mit den Druckbolzen fest
verbundene Abtriebsteil löst sich dabei vom Antriebsteil.

Während des Ausrückvorganges sind der Ringkolben, der
das Kugellager tragende erste Ring und der zweite Ring
über die Druckbolzen formschlüssig mit dem Abtriebsteil der Kupplung verbunden. Die Drehbewegung des Abtriebsteiles wird vom Kugellager aufgenommen, so daß
ein Schleifen der Druckbolzen am zweiten Ring verhindert wird.

Diese bekannte druckmittelbetätigbare Kupplung hat verschiedene Nachteile. Die beschriebene Einrichtung zum
Ausrücken der Kupplung ist durch die Verwendung eines
als Druckkörper dienenden Kugellagers aufwendig und
unterliegt einem relativ hohen Verschleiß. Während
des Ausrückvorganges wird eine besonders nachteilige
Belastung auf das Lager ausgeübt, da der vom Ringkolben beaufschlagte erste Ring gegen den Innenring und
der entgegengerichtet vom Antriebsteil beaufschlagte
zweite Ring gegen den Außenring des Kugellagers gedrückt wird. Die im ausgerückten Zustand auftretende
statische Belastung des Kugellagers kann unter Umständen nach relativ kurzer Zeit zur Zerstörung des Kugellagers führen.

Der Erfindung liegt deshalb die Aufgabe zugrunde, eine druckmittelbetätigbare Kupplung der eingangs beschriebenen Art zu schaffen, welche einfach und kompakt im Aufbau ist und eine hohe Verschleißfestigkeit besitzt.

Diese Aufgabe wird mit der im Patentanspruch 1 angegebenen Erfindung gelöst.
Weiterbildungen und vorteilhafte Ausgestaltungen der Erfindung werden in den Unteransprüchen aufgezeigt.

Die Erfindung bietet insbesondere den Vorteil, durch die Anordnung des zum Ausrücken der Kupplung notwendigen Betätigungskolbens sowie der vom Betätigungskolben begrenzten Arbeitskammer im Abtriebsteil der Kupplung keine bei einem Schaltvorgang die Drehbewegung der Kupplungsteile aufnehmenden Bauteile, wie z.B. Kugellager, zu benötigen.
Die sowohl am sich drehenden Bauteil als auch an einem feststehenden Bauteil anliegende Rotor-Dichtung wird nur während der Druckbeaufschlagung des Betätigungskolbens vom Druckmittel gegen diese beiden Bauteile gedrückt, so daß zwar eine hohe Dichtigkeit gewährleistet ist, die Rotor-Dichtung jedoch nur während eines Schaltvorganges durch aus der Drehung der Welle sich ergebende Reibung belastet wird.
Anhand der Zeichnung werden drei Ausführungsbeispiele der Erfindung nachstehend näher erläutert.

Es zeigen:

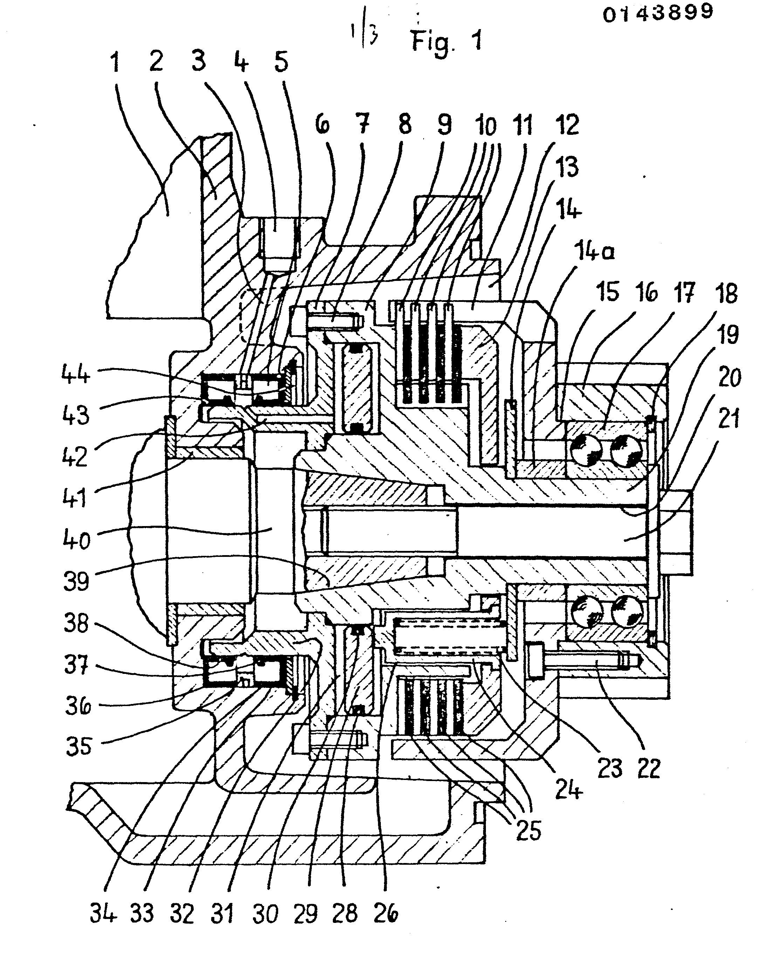

Figur 1 eine druckmittelbetätigbare Kupplung, die am Gehäuse eines Kompressors gelagert ist im Schnitt, wobei der Betätigungskolben im Abtriebsteil der Kupplung angeordnet ist und zwei nebeneinander angeordnete Dichtringe zwischen dem im Abtriebsteil der Kupplung angeordneten Teilstück und dem im Kompressorgehäuse angeordneten Teilstück einer Verbindungsleitung vorgesehen sind,

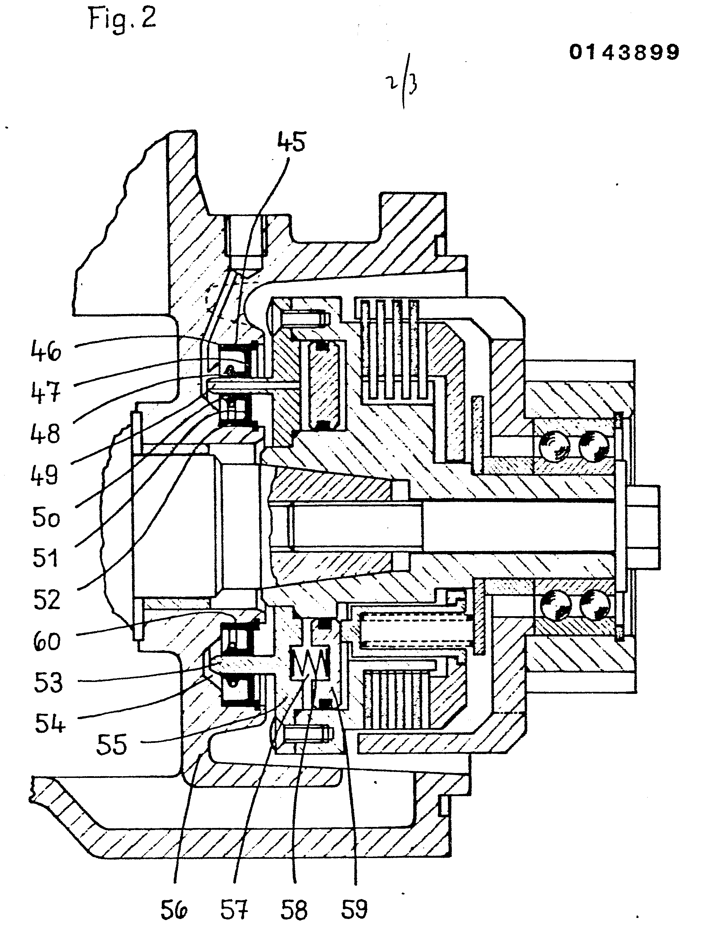

Figur 2 eine der in Figur 1 gezeigten Kupplung im wesentlichen gleiche Kupplung im Schnitt mit zwei koaxial zueinander angeordneten Dichtringen zwischen dem im Abtriebsteil vorgesehenen Teilstück und dem im Kompressorgehäuse angeordneten Teilstück der Verbindungsleitung und

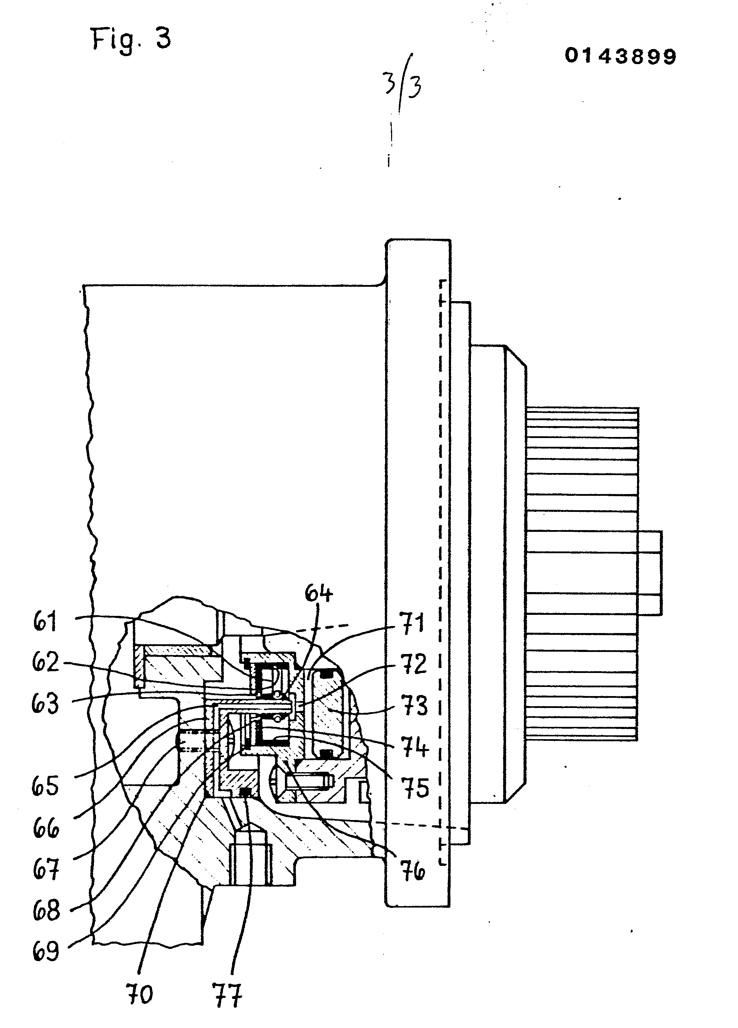

Figur 3 einen Ausschnitt der in Figur 2 dargestellten Kupplung, bei welcher jedoch die gesamte Verbindungsleitung ortsfest am Kompressorgehäuse angeordnet ist und in die von den Dichtringen begrenzte Druckmittelkammer hineinragt, wobei diese Druckmittelkammer im Abtriebsteil der Kupplung vorgesehen ist.

In Figur 1 wird eine druckmittelbetätigbare Kupplung dargestellt, deren bewegliche Bauteile von einem topfförmigen Ansatz 2, 12 des Kompressorgehäuses 1 teilweise umgeben sind. Im Gehäuse 2 ist eine mit einer Buchse 41 versehene Ausnehmung vorgesehen, durch welche das eine konische Mantelfläche 39 aufweisende freie Ende der Kurbelwelle 40 des Kompressors hindurchgeführt ist.

Die Kupplung besteht im wesentlichen aus einem mit einer Antriebsmaschine verbundenen Antriesbteil und einem drehfest mit der Kurbelwelle des Kompressors verbundenen Abtriebsteil.

Das Abtriebsteil setzt sich aus einem mehrfach abgestuften Rotationskörper 9, in dessen der Kurbelwelle 40, 39 zugewandten Stirnseite eine als Arbeitskammer dienende Ringkammer 31 vorgesehen ist, und einer die Ringkammer 31 begrenzenden Wand 7 zusammen, welche mittels Schrauben 8 am Rotationskörper 9 befestigt ist.

In Richtung der Längsachse des Rotationskörpers 9 verlaufend ist im Rotationskörper 9 eine abgestufte Bohrung 20 vorgesehen, welche auf ihrer der Kurbelwelle 40, 39 zugewandten Seite konisch ausgebildet ist. Der Rotationskörper 9 ist mit dem konisch ausgebildeten Teil der Bohrung 20 auf den Konus 39 der Kurbelwelle 40, 39 aufgezogen. Mittels eines Gewindebolzens 21, welcher durch die Bohrung 20 hindurchgeführt und in die Kurbelwelle 40, 39 eingeschraubt ist, sind der Rotationskörper 9 und die Kurbelwelle 40, 39 gegeneinander verspannt.

Auf einer Abstufung des Rotationskörpers 9 ist eine Druckplatte 13 mit einem Lamellenpaket 25 in Richtung der Längsachse des Rotationskörpers 9 verschiebbar angeordnet. Die mit den Lamellen 25 versehene Druckplatte 13 liegt innerhalb eines topfförmig ausgebildeten Teiles 11 des Antriebsteiles der Kupplung.

Das Antriebsteil setzt sich aus dem besagten topfförmigen Teil 11, dessen Boden einen sich nach außen erstreckenden ringförmigen Vorsprung 15 aufweist, und einem auf dem Vorsprung 15 gelagerten, mittels Schrauben 22 am Boden des topfförmigen Teiles 11 befestigten

Zahnkranz 16 zusammen. An der Innenwand des topfförmigen Teiles 11 sind sich radial nach innen erstreckende Lamellen 10 befestigt, welche sich in die freien Räume zwischen den Lamellen 25 des Rotationskörpers 9 hineinerstrecken. Das aus dem topfförmigen Teil 11, dem ringförmigen Vorsprung 15, dem Zahnkranz 16 und den Lamellen 10 bestehende Antriebsteil ist mittels eines Doppelkugellagers 17, welches auf dem abgestuften freien Endbereich 19 des Abtriebsteiles 7, 9, 13, 19, 25 angeordnet ist, drehbar auf dem Abtriebsteil 7, 9, 13, 19, 25 gelagert. Zwischen dem Doppelkugellager 17 und einer Abstufung des Rotationskörpers 9 sind auf dem freien Endbereich 19 des Rotationskörpers 9 eine Stützplatte 14 und ein Distanzring 14 a gelagert. Mittels eines Sicherungsringes 18, einer Scheibe und des Gewindebolzens 21 sind das Doppelkugellager 17 und die Stützplatte 14 mit dem Rotationskörper 9 verspannt.

Im Rotationskörper 9 sind Ausnehmungen 26 vorgesehen, welche parallel zur Mittelachse des Rotationskörpers 9 verlaufen und zur Aufnahme von Hohlkolben 24 dienen. Die Hohlkolben 24 sind fest mit der Druckplatte 13 verbunden und werden von Federn 23, die sich an der Stützplatte 14 abstützen, in Richtung auf die Ringkammer 31 zu beaufschlagt. Die Ringkammer 31 wird von einem als Betätigungskolben dienenden Ringkolben 29 begrenzt, welcher mit zwei Dichtringen 28 und 30 versehen ist.

Auf derjenigen Seite der die Ringkammer 31 begrenzenden Wand 7, welche der Ringkammer 31 abgewandt ist, ist ein sich parallel zur Längsachse des Rotationskörpers 9 erstreckender umlaufender Vorsprung 32 vorgesehen, welcher sich in eine Ausnehmung 33 des topfförmigen Ansatzes 2 des Kompressorgehäuses 1 hineinerstreckt. In der Ausnehmung 33 sind zwei als Rotor-Dichtung dienende Simmerringe 6
und 43 gelagert. Die Simmerringe 6, 43 weisen U-Profil
auf und sind so zueinander angeordnet, daß die freien
Enden ihrer Schenkel 34, 36 und 37, 38 gegeneinander
gerichtet sind. Von den beiden Simmerringen wird eine
Druckmittelkammer 5 begrenzt. Zwischen den beiden Simmerringen 6, 43 ist ein mit einer sich in radialer Richtung erstreckenden Bohrung und einer umlaufenden Nut
versehener Distanzring 35 angeordnet. Die inneren Schenkel 37, 38 der Simmerringe 6, 43 liegen an der Umfangsfläche des umlaufenden Vorsprunges 32 an.

Über eine Verbindungsleitung, welche sich aus einem im
Ansatz 2 des Kompressorgehäuses 1 angeordneten ersten
Teilstück 3 und einem im umlaufenden Vorsprung 32 sowie
in der Wand 7 vorgesehenen zweiten Teilstück 42 zusammensetzt, ist die vom Ringkolben 29 begrenzte Arbeitskammer
31 mit einem Druckmittelanschluß 4 verbunden. Ein Sicherungsring 44 begrenzt eine mögliche axiale Bewegung des
Simmerringes 6 in Richtung auf die Wand 7 zu. Der Druckmittelanschluß 4 ist über eine nicht dargestellte Steuerventileinrichtung mit einer Druckmittelquelle verbindbar.

Die Funktion der im vorstehenden beschriebenen Kupplung
wird nachstehend näher erläutert.

Es wird angenommen, daß die Kupplung zwischen dem Motor
eines Kraftfahrzeuges und einem Kompressor zu Erzeugung
von Druckluft angeordnet ist.
Das auf dem Abtriebsteil 7, 9, 13, 19, 25 drehbar gelagerte Antriebsteil 11, 10, 15, 16 der Kupplung steht
über das Zahnrad 16 mit der Nockenwelle des Motors in
Wirkverbindung. Das Abtriebsteil 7, 9, 13, 25, 19 ist
drehfest mit der Kurbelwelle des Kompressors verbunden.

0143899

An den Kompressor ist ein Druckluft-Vorratsbehälter angeschlossen, der einerseits mit einem Verbraucher und andererseits über eine Steuerventileinrichtung mit dem Druckmittelanschluß 4 der druckmittelbetätigbaren Kupplung verbindbar ist.

In der gezeigten Stellung steht das Antriebsteil 11, 10, 15, 16 mit dem Abtriebsteil 7, 9, 13, 25, 19 in Kraftschluß, so daß die Kurbelwelle 40, 39 angetrieben wird.

Hat der Druck im Vorratsbehälter einen vorbestimmten Wert erreicht, so schaltet die Steuerventileinrichtung um. Vom Vorratsbehälter gelangt Druckluft über den Druckmittelanschluß 4 und das Teilstück 3 der Verbindungsleitung 3, 42 in die Druckmittelkammer 5 und von dieser über das Teilstück 42 der Verbindungsleitung 3, 42 in die vom Ringkolben 29 begrenzte Arbeitskammer 31. Der sich in der Druckmittelkammer 5 aufbauende Druck bewirkt, daß die freien Schenkel 37, 38 der U-förmigen Simmerringe 6, 43 gegen die Umfangsfläche des ringförmigen Vorsprunges 32 des Abtriebsteiles der Kupplung gedrückt werden, so daß eine gute Abdichtung der beiden Teilstücke 3, 42 der Verbindungsleitung gegen den Gehäuseinnenraum gewährleistet ist.

Gleichzeitig verschiebt der sich in der Arbeitskammer 31 aufbauende Druck den Ringkolben 29 nach rechts in Richtung auf die Hohlkolben 24 zu. Die Hohlkolben 24 werden vom Ringkolben 29 entgegen der Kraft der auf die Hohlkolben 24 einwirkenden Federn 23 nach rechts in Richtung auf die Stützscheibe 14 zu verschoben, wobei die mit dem Lamellenpacket 25 versehene, mit den Hohlkolben 24 fest verbundene Druckplatte 13 mitgenommen wird. Die Lamellen 25 des Abtriebsteiles 7, 9, 13, 25, 19 lösen sich von den Lamellen 10 des Antriebsteiles 11, 10, 15, 16. Die Kupplung ist jetzt ausgerückt. Das Abtriebsteil 7, 9, 13, 25, 19 kommt zum Stillstand und das Antriebsteil 11, 10, 15, 16 dreht im Leerlauf.

Ist der Druck im Druckluft-Vorratsbehälter auf einen vorbestimmten Mindestdruck abgesunken, so schaltet die Steuerventileinrichtung wieder um. Die von den beiden Simmerringen 6 und 43 begrenzte Druckmittelkammer 5 wird entlüftet. Gleichzeitig erfolgt die Entlüftung der vom Ringkolben 29 begrenzten Arbeitskammer 31 über die Verbindungsleitung 3, 42, die von den beiden Simmerringen begrenzte Druckmittelkammer 5 sowie den Druckmittelanschluß 4. Aufgrund des Druckabfalls in der Arbeitskammer 31 überwiegt die Kraft der auf die Hohlkolben 24 einwirkenden Federn 23. Die mit dem Lamellenpacket 25 versehene Druckplatte 13 sowie der Ringkolben 29 werden nach links verschoben und so die Lamellen 25 des Abtriebsteiles 7, 9, 13, 25, 19 wieder gegen die Lamellen 10 des Antriebsteiles 11, 10, 15, 16 gedrückt.

Die Kupplung ist jetzt eingerückt und die Kurbelwelle 40, 39 des Kompressors wird wieder in Drehbewegung versetzt.
Da die von den Simmerringen 6 und 43 begrenzte Druckmittelkammer 5 jetzt wieder drucklos ist, liegen die freien Schenkel 37, 38 der Simmerringe 6 und 43 nur noch leicht an der Umfangsfläche des ringförmigen Vorsprunges 32 des Abtriebsteiles an.

Der Verschleiß der Dichtelemente (Simmerringe 6,43) wird auf diese Art und Weise stark reduziert. Da die den Ringkolben 29 aufnehmende Arbeitskammer 31 im Abtriebsteil der Kupplung angeordnet und gegen das Kompressorgehäuse abgedichtet ist, treten zwischen Kupplung und der Kurbelwelle des Kompressors keine in axialer Richtung wirkenden Kräfte auf.

In Figur 2 ist eine druckmittelbetätigbare Kupplung dargestellt, deren Aufbau im wesentlichen gleich dem Aufbau der in Figur 1 gezeigten Kupplung ist. In diesem Ausführungsbeispiel sind die das Gehäuse gegen die sich drehenden Teile der Kupplung abdichtenden Dichtringe jedoch koaxial zueinander angeordnet. Der besseren Übersicht halber wird nachfolgend nur die Anordnung der Dichtringe erläutert.

An der die zur Aufnahme des Ringkolbens dienenden Arbeitskammer begrenzenden Wand 55 ist ein hülsenförmiger Vorsprung 53 angeordnet, der sich in eine als Druckmittelkammer 54 ausgebildete Ausnehmung in der Stirnseite des Kompressorgehäuses 56 hineinerstreckt. Der Vorsprung 53 weist einen als erstes Teilstück einer Verbindungsleitung dienenden Kanal 49 auf, welcher in Richtung der Längsachse des Vorsprunges 53 verläuft und die Druckmittelkammer 54 mit der vom Ringkolben 59 begrenzten Arbeitskammer 57 verbindet. Der Ringkolben 59 wird von Federn 58, die sich an der Wand 55 abstützen, unter leichter Vorspannung an den die Druckplatte des Abtriebsteiles beaufschlagenden Hohlkolben gehalten. Die Druckmittelkammer 54 wird von einem als Simmerring ausgebildeten ersten Dichtring 50, 51, 52 und von einem als Simmerring ausgebildeten zweiten Dichtring 46, 47, 48 begrenzt. Der erste Dichtring 50, 51, 52 weist U-Profil auf und ist so angeordnet, daß er mit seinem inneren Schenkel 52 an der Wandung 60 der Druckmittelkammer 54 und mit seinem äußeren freien Schenkel 50 an der inneren Fläche des hülsenförmigen Vorsprunges 53 anliegt. Der ebenfalls U-Profil aufweisende zweite Dichtring 46, 47, 48 ist koaxial zum ersten Dichtring 50, 51, 52 angeordnet, wobei sein innerer freier Schenkel 48 an der Umfangsfläche des hülsenförmigen Vorsprunges 53 und sein äußerer Schenkel 46 an der die Druckmittelkammer 54 begrenzenden Wandung 45 anliegt. Die U-förmigen Dichtringe 46, 47, 48, 50, 51, 52 schließen mit ihren Böden 47, 51 die Druckmittelkammer 54 gegen die topfförmige Ausnehmung des Kompressorgehäuses ab.

Bei Druckbeaufschlagung der Arbeitskammer 57 und somit auch der Druckmittelkammer 54 über die als zweites Teilstück der Verbindungsleitung dienende ortsfeste Druckmittelleitung und das erste Teilstück 49 der Verbindungsleitung werden die freien Schenkel 48, 50 der beiden Dichtringe 46, 47, 48, 50, 51, 52 gegen die innere Wandung und gegen die äußere Wandung des hülsenförmigen Vorsprunges 53 gedrückt. Bei Druckentlastung der Arbeitskammer 57 und der Druckmittelkammer 54 liegen die beiden freien Schenkel 48 und 50 der beiden Dichtringe 46, 47, 48, 50, 51, 52 nur leicht am hülsenförmigen Vorsprung 53 an, so daß der Verschleiß der Dichtringe stark reduziert wird.

Figur 3 zeigt einen Ausschnitt einer der im vorstehenden beschriebenen druckmittelbetätigbaren Kupplung im wesentlichen gleichen Kupplung, wobei die von den Dichtringen begrenzte Druckmittelkammer im Abtriebsteil der Kupplung angeordnet ist.

Im Abtriebsteil der Kupplung ist eine ringförmige Arbeitskammer 71 angeordnet, die einerseits von einem Ringkolben 73 und andererseits von einer Wand 76 begrenzt wird. An der Stirnwand des Kompressorgehäuses ist mittels Schrauben 67 ein als Verbindungsleitung zwischen der Arbeitskammer 71 und einer nicht dargestellten Druckmittelquelle dienendes hülsenförmiges Teil 66 befestigt, welches einen Kanal 65 aufweist und in eine ringförmige Druckmittelkammer 61 des Abtriebsteiles der Kupplung hineinragt. Die Druckmittelkammer 61 wird von einem ersten U-förmigen Dichtring 62, 63, 64 und einem zweiten U-förmigen Dichtring 74, 75, 68 begrenzt, welche koaxial zueinander angeordnet sind. Der erste Dichtring 62, 63, 64 liegt einerseits an der Innenwand des Teiles 66 an und ist andererseits an der innenliegenden Wandung der Druckmittelkammer 61 gelagert. Der zweite Dichtring 74, 75, 68 liegt einerseits an der äußeren Umfangsfläche des Teiles 66 an und ist andererseits an der die Druckmittelkammer 61 begrenzenden außenliegenden Wandung gelagert. Ein Sicherungsring 69 verhindert ein Herausgleiten der Dichtringe 62, 63, 64, 74, 75, 68 aus der Druckmittelkammer 61. In der die Druckmittelkammer 61 begrenzenden Wand ist eine Bohrung 72 vorgesehen, welche die Druckmittelkammer 61 mit der vom Ringkolben 73 begrenzten Arbeitskammer 71 verbindet. Das als Verbindungsleitung dienende Teil 66, 65 ist mittels zweier Dichtringe 70, 77 gegen das Kompressorgehäuse abgedichtet.

Bei Druckbeaufschlagung der Arbeitskammer 71 über die Verbindungsleitung 65, 66 und die Druckmittelkammer 61 werden die freien Schenkel 64 und 68 der U-förmigen Dichtringe 62, 63, 64, 68, 74, 75 gegen das Teil 66 gedrückt und so die Verbindungsleitung und die Arbeitskammer 71 gegen den Gehäuseinnenraum abgedichtet. Es ist selbstverständlich auch möglich, die Verbindungsleitung in dem Endbereich der Kurbelwelle anzuordnen und über einen im Abtriebsteil der Kupplung vorzusehenden Kanal mit der ebenfalls im Abtriebsteil angeordneten Arbeitskammer zu verbinden. Bei einer derartigen Anordnung der Verbindungsleitung wäre zur Abdichtung gegenüber einer ortsfesten Druckmittelleitung ein Dichtring mit nur geringem Durchmesser erforderlich.

- 15 -

Patentansprüche

1. Druckmittelbetätigbare Kupplung mit folgenden Merkmalen:

   a) es ist ein mit einer Antriebsmaschine verbundenes Antriebsteil (10,11,15,16) vorgesehen;

   b) es ist ein mit einem anzutreibenden Teil verbundenes Abtriebsteil (9,7,13,19,25) vorgesehen;

   c) es sind kraft- und/oder formflüssige Kupplungsmittel vorgesehen, welche das Antriebsteil (10,
   11,15,16) und das Abtriebsteil (9,7,13,19,25)
   unter dem Einfluß einer Federkraft miteinander
   in Wirkverbindung bringen können;

   d) es ist eine einen Betätigungskolben aufweisende
   Einrichtung vorgesehen, mittels welcher die Wirkverbindung zwischen dem Antriebsteil (10,11,15,
   16) und dem Abtriebsteil (9,7,13,19,25) gegen
   die Federkraft aufhebbar ist;

   e) der Betätigungskolben ist vom Druck einer Arbeitskammer beaufschlagbar, welche mit einer
   Druckmittelquelle verbindbar ist;

   gekennzeichnet durch die folgenden Merkmale:

   f) die Arbeitskammer (31) und der Betätigungskolben (29) sind im Abtriebsteil (9,7,13,19,25)
   der Kupplung angeordnet;

g) die Verbindungsleitung zwischen der Arbeitskammer (31) und der Druckmittelquelle weist eine Rotor-Dichtung auf, die zwischen dem Abtriebsteil (9,7,13,19,25) oder dem anzutreibenden Teil einerseits und einer dem gegenüber ortsfesten Druckmittelleitung angeordnet ist.

2. Druckmittelbeätigbare Kupplung nach Anspruch 1, <u>gekennzeichnet durch die folgenden Merkmale:</u>

a) die Rotor-Dichtung umfaßt eine Druckmittelkammer (5) deren Wände wenigstens zum Teil von wenigstens einem Dichtungselement gebildet werden;

b) das Dichtungselement weist einen Schlitz oder eine andersartig geformte Öffnung zur Durchleitung des Druckmittels auf;

c) das Dichtungselement ist so ausgebildet, daß es bei Druckbeaufschlagung der Arbeitskammer (31) im Bereich des Schlitzes bzw. der Öffnung am Ende des an die Rotor-Dichtung anschließenden und relativ gegenüber der Druckmittelkammer (5) bewegbaren Teilstückes der Verbindungsleitung dichtend anliegt.

3. Druckmittelbetätigbare Kupplung nach Anspruch 2, <u>dadurch gekennzeichnet,</u> daß das Ende des dichtend an der Rotor-Dichtung anliegenden Teilstückes 49 der Verbindungsleitung in die Druckmittelkammer (54) hineinragt.

4. Druckmittelbetätigbare Kupplung nach wenigstens einem der vorhergehenden Ansprüche, dadurch gekennzeichnet, daß das Teilstück der Verbindungsleitung zwischen der Arbeitskammer (31) und der Rotor-Dichtung auf wenigstens einem Teil seiner Länge durch einen Kanal (42) gebildet wird, der in einem am Abtriebsteil (9,7,13,19,25) angeordneten, umlaufenden hülseförmigen Vorsprung (32) vorgesehen ist.

5. Druckmittelbetätigbare Kupplung nach wenigstens einem der vorhergehenden Ansprüche, gekennzeichnet durch die folgenden Merkmale:

   a) die Rotor-Dichtung wird von zwei Dichtringen (34,37,6,36,38,43) gebildet;

   b) die Dichtringe weisen U-Profil auf;

   c) die Dichtringe begrenzen mit ihren Böden und mit ihren Schenkeln die Druckmittelkammer.(5).

6. Druckmittelbetätigbare Kupplung nach wenigstens einem der vorhergehenden Ansprüche, gekennzeichnet durch die folgenden Merkmale:

   a) die Rotor-Dichtung besteht aus zwei Dichtringen (46,47,48,50,51,52), welche koaxil zueinander angeordnet sind;

   b) eine die Arbeitskammer (57) begrenzende Wand (55) weist auf ihrer dem Betätigungskolben (59) abgewandten Seite einen umlaufenden Vorsprung (53) auf, in welchem ein Teilstück (49) der Verbindungsleitung zwischen der Arbeitskammer (57) und der Druckmittelquelle angeordnet ist;

c) der umlaufende Vorsprung (53) ist so ausgebildet und so angeordnet, daß der eine Dichtring (46,47,48) an der äußeren Fläche des umlaufenden Vorsprunges (53) und der andere Dichtring (50,51,52) an der inneren Fläche des umlaufenden Vorsprunges (53) dichtend anliegt;

d) das im umlaufenden Vorsprung (53) angeordnete Teilstück (49) der Verbindungsleitung erstreckt sich durch die Wand (55) hindurch bis in die Arbeitskammer (57) hinein;

e) die Dichtringe (46,47,48,50,51,52) begrenzen die Druckmittelkammer (54), welche von der Arbeitskammer (57) getrennt ortsfest in einem Gehäuse angeordnet ist.

7. Druckmittelbetätigbare Kupplung nach wenigstens einem der vorhergehenden Ansprüche, gekennzeichnet durch die folgenden Merkmale:

a) das Abtriebsteil (9,7,13,19,25) weist einen hülsenförmigen Vorsprung (32) auf, in welchem ein Teilstück (42) der Verbindungsleitung zwischen der im Abtriebsteil (9,7,13,19,25) angeordneten Arbeitskammer (31) und der Druckmittelquelle angeordnet ist;

b) der hülsenförmige Vorsprung (32) erstreckt sich in eine Ausnehmung des feststehenden Gehäuses hinein;

c) zwischen der Wandung der Ausnehmung des feststehenden Gehäuses und der Mantelfläche des hülsenförmigen Vorsprunges (32) sind zwei Dichtringe (34,37,6,36,38,43) nebeneinander angeordnet, derart, daß die freien Enden ihrer Schenkel einander zugewandt sind;

d) die Dichtringe (34,37,6,36,38,43) begrenzen eine Druckmittelkammer (5);

e) zwischen den einander zugewandten Enden der freien Schenkel der Dichtringe (34,37,6,36,38,43) ist ein mit einer umlaufenden Ausnehmung versehener Distanzring (35) vorgesehen, über welchen die Druckmittelkammer (5) und das im umlaufenden Vorsprung (32) vorgesehene Teilstück (42) der Verbindungsleitung mit dem im Gehäuse angeordneten Teilstück (3) der Verbindungsleitung verbunden sind.

8. Druckmittelbetätigbare Kupplung nach wenigstens einem der vorhergehenden Ansprüche, <u>gekennzeichnet durch die folgenden Merkmale:</u>

a) die Druckmittelkammer (61) ist im Abtriebsteil der Kupplung vorgesehen;

b) die Druckmittelkammer (61) ist über eine Bohrung (72) mit der vom Betätigungskolben (73) begrenzten Arbeitskammer (71) verbunden;

c) die Druckmittelkammer (61) wird von zwei koaxial zueinander angeordneten Dichtringen (62,63,64, 68,74,75) begrenzt, wobei der eine Dichtring mit seinem freien Schenkel (64) an der inneren Umfangsfläche und der andere Dichtring mit seinem freien Schenkel an der äußeren Umfangsfläche eines in die Druckmittelkammer (61) hineinragenden, als Verbindungsleitung (65,66) dienenden Teiles anliegt;

d) die Verbindungsleitung (65,66) ist am feststehenden Gehäuse befestigt.

9. Druckmittelbetätigbare Kupplung anch wenigstens einem der vorhergehenden Ansprüche, gekennzeichnet durch die folgenden Merkmale:

a) ein Teilstück der Verbindungsleitung ist in der das Abtriebsteil bzw. das Antriebsteil der Kupplung tragenden Welle angeordnet;

b) dieses Teilstück der Verbindungsleitung ist gegenüber einer ortsfesten Druckmittelleitung abgedichtet.

Fig. 1

0143899

1/3

Fig. 2

2/3

0143899

Fig. 3

61
62
63
64
65
66
67
68
69
70    77
71
72
73
74
75
76

Europäisches
Patentamt

**EUROPÄISCHER RECHERCHENBERICHT**

**0143899**
Nummer der Anmeldung

EP 84 10 9970

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 016 121 (B. MOSBACHER) <br><br> * Insgesamt * | 1,2 | F 16 D 25/06 <br> F 16 L 27/08 |
| A | | 5 | |
| | --- | | |
| X | US-A-2 742 991 (S. GILBERT et al.) <br><br> * Insgesamt * | 1,3,5 | |
| A | | 2,7 | |
| | --- | | |
| X | US-A-3 145 816 (DE LOREAN et al.) <br><br> * Insgesamt * | 1,9 | |
| A | | 2,5 | RECHERCHIERTE SACHGEBIETE (Int. Cl.4) |
| | --- | | F 16 D 25/00 |
| X | GB-A-2 099 933 (HORTON INDUSTRIES) <br><br> * Seite 2; Figur 10 * | 1,9 | |
| A | | 2 | |
| | --- | | |
| A | DE-A-2 330 750 (I. CHIVARI) <br><br> * Insgesamt * | 1,2,5, 9 | |
| | --- | | |
| | | -/- | |

Der vorliegende Recherchenbericht wurde für alle Patentansprüche erstellt.

| Recherchenort <br> DEN HAAG | Abschlußdatum der Recherche <br> 10-01-1985 | Prüfer <br> BALDWIN D. |
|---|---|---|

Europäisches
Patentamt

**EUROPÄISCHER RECHERCHENBERICHT**

**0143899**
Nummer der Anmeldung

EP 84 10 9970
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 034 925 (H. KLAUE) --- | | |
| A,D | DE-A-3 030 094 (KNORR-BREMSE) ----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 10-01-1985 | BALDWIN D. |